(19) Europäisches Patentamt

European Patent Office

Office européen des brevets

(11) Veröffentlichungsnummer: **0 221 460 B1**

(12) # EUROPÄISCHE PATENTSCHRIFT

(45) Veröffentlichungstag der Patentschrift: **18.09.91**

(21) Anmeldenummer: **86114719.7**

(22) Anmeldetag: **23.10.86**

(51) Int. Cl.⁵: **A61C 1/07**, B23Q 11/00, B06B 1/12

(54) **Vorrichtung zum Reinigen eines Zahnes.**

(30) Priorität: **06.11.85 CH 4763/85**
**15.09.86 CH 3691/86**

(43) Veröffentlichungstag der Anmeldung:
**13.05.87 Patentblatt 87/20**

(45) Bekanntmachung des Hinweises auf die
Patenterteilung:
**18.09.91 Patentblatt 91/38**

(84) Benannte Vertragsstaaten:
**AT BE DE FR GB IT NL SE**

(56) Entgegenhaltungen:
**DE-C- 75 689**
**DE-C- 545 369**
**DE-C- 564 697**
**GB-A- 635 227**
**US-A- 4 351 225**

(73) Patentinhaber: **Reinhard, Peter**
**Weingartenstrasse 8**
**CH-8957 Spreitenbach(CH)**

Patentinhaber: **Römhild, Ludwig, Dr.**
**Am Kugelfeld 3**
**W-8240 Berchtesgaden(DE)**

(72) Erfinder: **Römhild, Ludwig, Dr.**
**Am Kugelfeld 3**
**W-8240 Berchtesgaden(DE)**
Erfinder: **Hartmann, Erwin**
**Gugelweg 15**
**CH-5115 Möriken(CH)**
Erfinder: **Reinhard, Peter**
**Weingartenstrasse 8**
**CH-8957 Spreitenbach(CH)**

(74) Vertreter: **EGLI-EUROPEAN PATENT ATTOR-**
**NEYS**
**Horneggstrasse 4**
**CH-8008 Zürich(CH)**

## Beschreibung

Die Erfindung betrifft einen Scaler zum Reinigen eines Zahns, insbesondere seiner unter den Zahnfleisch liegenden Partien von auf seiner Oberfläche befindlichen Schichten an Zahnstein, Konkrementen und Wurzelzement nach dem Oberbegriff des Anspruchs 1.

Es ist bekannt, für die Reinigung eines Zahns von Zahnstein, Konkrementen (dem besonders harten subgingivalen Zahnstein) und nekrotischem Wurzelzement bei der Behandlung von Parodontose Handinstrumente, die als Scaler bezeichnet werden, einzusetzen. Dabei wird der Scaler vom behandelnden Zahnarzt ähnlich wie ein Schreibinstrument zwischen Daumen, Zeigefinger und Mittelfinger gehalten. Der Scaler ist im wesentlichen ein mit einem Handgriff versehenes Schabegerät. Das Schabegerät trägt einen Schabeeinsatz, mit dessen Schneide die Reinigung des Zahnes durchgeführt wird. Hierbei wird der Mittelfinger auf der Schaufelfläche des Zahnes abgestützt und die Schneide des Schabeeinsatzes entlang der Zahnwurzel unter das Zahnfleisch geführt und vom tiefsten Punkt der Zahnfleischtasche unter Ausübung eines Druckes an der Zahnwurzel schlagartig mit einem kräftigen Ruck schabend in Richtung der Kaufläche des Zahnes bewegt. Dieser Vorgang wird solange wiederholt, bis die Ablagerungen entfernt sind.

Es ist auch ein Gerät bekannt (DE-C-545 369), bei welchem eine oszillierende Bewegung einer in einem Handgriff gelagerten, mit Federkraft beaufschlagten Halterung für diverse zahnärztliche Instrumente, u. a. auch einen Schaber, durch Umsetzung der Drehbewegung einer Welle mittels einer Exzenterscheibe erzeugt wird. Dabei wird jedoch zwangsläufig der Griff des Geräts in vibrierende Bewegung versetzt, was für dessen Benützer lästig und auf die Dauer ermüdend ist.

Der Erfindung liegt die Aufgabe zugrunde, einen Scaler anzugeben, welcher ruhig in der Hand des Benützers liegt und daher nicht zu dessen rascher Ermüdung führt.

Diese Aufgabe wird gemäss der Erfindung durch die Merkmale im Kennzeichen der Anspruchs 1 gelöst.

Durch die Erfindung wird ein Scaler geschaffen, bei welchem die oszillierende Bewegung des Schabers sehr präzise ausgeglichen wird und daher keine Vibrationen am Gehäuse auftreten. Der Scaler lässt sich dadurch ermüdungsfrei handhaben und sehr genau führen.

Die Erfindung ist in der Zeichnung in Ausführungsbeispielen dargestellt und nachfolgend beschrieben. Es zeigen:

Fig. 1       einen Längsschnitt eines Scalers gemäss der Erfindung,

Fig. 2       einen Querschnitt des Scalers nach Fig. 1 längs der Linie II - II,

Fig. 3       einen Längsschnitt eines teilweise dargestellten Scalers nach einer zweiten Ausführungsform,

Fig. 4       einen Längsschnitt eines teilweise dargestellten Scalers nach einer dritten Ausführungsform,

Fig. 5       einen Längsschnitt eines teilweise dargestellten Scalers nach einer vierten Ausführungsform,

Fig. 6       einen Längsschnitt eines teilweise dargestellten Scalers nach einer fünften Ausführungsform,

Fig. 7       einen Längsschnitt eines teilweise dargestellten Scalers nach einer sechsten Ausführungsform,

Fig. 8       einen Längsschnitt eines teilweise dargestellten Scalers nach einer siebenten Ausführungsform,

Fig. 9       einen Längsschnitt eines teilweise dargestellten Scalers nach einer achten Ausführungsform,

Fig. 10       einen Längsschnitt eines teilweise dargestellten Scalers mit Spiel aufweisenden Kupplungsmitteln,

Fig. 11       einen Längsschnitt eines weiteren Scalers,

Fig. 12       einen Teilschnitt des Scalers nach Fig. 11 längs der Linie XII - XII und

Fig. 13       einen Schnitt längs der Linie XIII - XIII in Fig. 12 in vergrössertem Massstab.

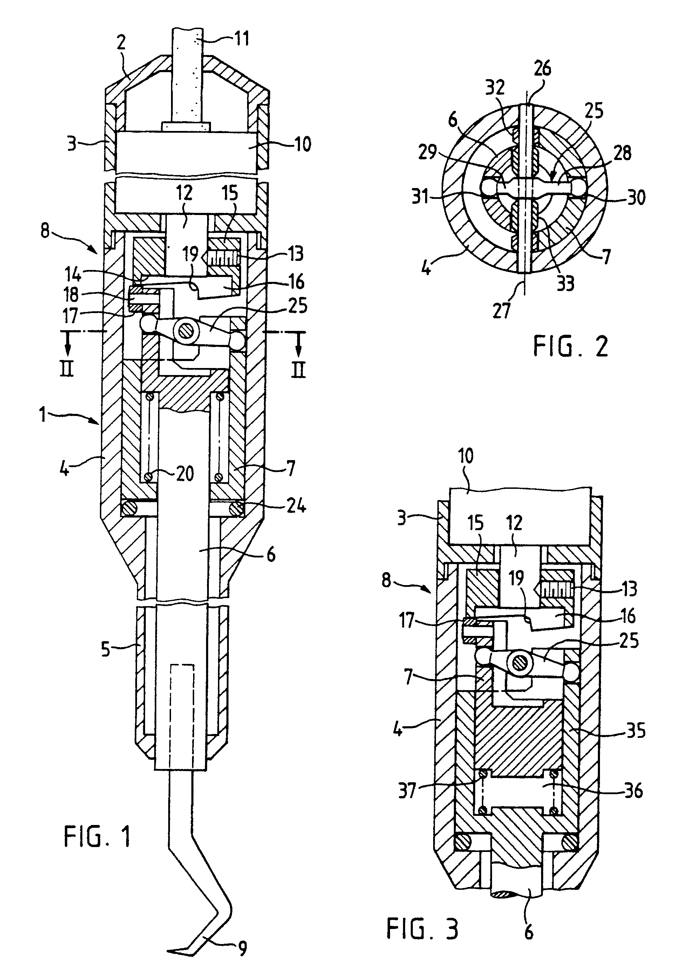

Der in Fig. 1 dargestellte Scaler weist einen als Gehäuse ausgebildeten Handgriff 1 auf. Dieser setzt sich aus einem Deckel 2, einem hinteren Gehäuseteil 3 und einem vorderen Gehäuseteil 4 zusammen. Am vorderen Gehäuseteil 4 schliesst ein Gehäuse 5 an. Der hintere Gehäuseteil 3 dient zur Aufnahme eines Antriebsmittels 10, während im vorderen Gehäuseteil 4 und im Gehäusehals 5 eine Schlagstange 6, ein Schlagkörper 7 und Uebertragungsmittel 8 angeordnet sind. Die Uebertragungsmittel 8 weisen in den Scalern nach Fig. 1 bis 8 unterschiedliche Ausbildung auf, jedoch kommt ihnen dieselbe Aufgabe zu, die Bewegung des Antriebsmittels 10 in eine Bewegung der Schlagstange 6 umzuwandeln. Die Schlagstange 6 trägt an dem den Uebertragungsmitteln 8 abgewandten Ende einen Schaber 9, mit dem die Reinigung eines Zahns durchgeführt wird. Damit jedoch diese Reinigung durchgeführt werden kann, hat sich der Schaber 9 verhältnismässig langsam vom Handgriff wegzubewegen, während die Rückbewegung gegen den Handgriff hin schlag-und ruckartig erfolgen muss.

In Fig. 1 setzten sich die Uebertragungsmittel 8 aus einer Kulissenscheibe 15 und einer an der Schlagstange 6 mittels eines Zapfens 18 drehbar gelagerten Tastrolle 17 zusammen. Das Antriebsmittel 10 ist ein mit einem, den Deckel 2 durchdringenden elektrischen Anschluss 11 versehener elektrischer Antriebsmotor, der gegebenenfalls mit einem Reduktionsgetriebe ausgerüstet ist. Auf der Abtriebswelle 12 des Motors bzw. des Getriebes ist eine Kulissenscheibe 15 mittels eines Gewindestiftes 13 fest gelagert, auf deren Stirnseite 14 sich eine als kreisförmiger Rand ausgebildete Kulisse 16 erhebt. Die Kulisse 16 bildet eine stetig geneigte Bahn, auf der die Tastrolle 17 abrollt und die an einer Stelle einen sprunghaften Uebergang 19 bildet. Dreht sich die Kulissenscheibe 15, vom Schaber 9 her gesehen, im Gegenuhrzeigersinn, wird die Schlagstange 6 durch die Tastrolle 17 langsam vom Handgriff weg gegen die Wirkung einer Arbeitsfeder 20 bewegt. Beim sprunghaften Uebergang 19 wird die Schlagstange und damit der Schaber 9 in einer schlag- oder ruckartigen Bewegung um die Sprunghöhe des Ueberganges 19 in Richtung auf das Antriebsmittel 10 bewegt. Diese Bewegung entspricht der anstrengenden manuellen Schlagbewegung, die der Zahnarzt mit einem bekannten Scaler ausführen muss. Durch den in Fig. 1 beschriebenen Scaler wird nun diese schlagartige Bewegung vom Gerät selbsttätig durchgeführt, wodurch der Zahnarzt von dieser anstrengenden Tätigkeit entlastet wird.

Es zeigt sich, dass die Masse der schlagartig bewegten Schlagstange 6 eine Reaktion am Handgriff 1 auslöst, durch welche der Handgriff in die Gegenrichtung bewegt und dadurch die schlagartige Rückbewegung des Schabers 9 weitgehend vermindert. Um diesen Nachteil aufzuheben, ist im vorderen Gehäuseteil 4 der Schlagkörper 7 derart mittels eines zweiarmigen Kupplungshebels 25 mit der Schlagstange 6 gekuppelt, dass der Schlagkörper 7 eine der Bewegungsrichtung der Schlagstange 6 entgegengesetzte Bewegung ausführt. Dies bedeutet, dass der Schlagkörper bei der schlagartigen Rückbewegung der Schlagstange 6 den Massenausgleich gewährleistet, so dass der Handgriff 1 während der Rückbewegung des Schabers 9 unbeweglich in der Hand des Operateurs liegt. Durch die Arbeitsfeder 20 wird die Bewegung der Schlagstange 6 und des Schlagkörpers 7 unterstützt. Ein Einlagering 24, z.B. aus einem Elastomer oder einem andern Kunststoff, dämpft die Bewegung des Schlagkörpers 7 am Ende der Rückbewegung des Schabers 9. Die Ausführungsbeispiele nach Fig. 3 bis 12 zeigen Scalerantriebe, die alle einen Schlagkörper 7 für den Massenausgleich aufweisen. Lediglich die Anordnung der Schlagstange 6, des Schlagkörpers 7 und der Uebertragungsmittel weist Unterschiede auf.

Aus Fig. 2 ist die Lagerung des Kupplungshebels 25 ersichtlich. Der Kupplungshebel 25 ist auf einer Welle 26 mit einer Drehachse 27 drehbar gelagert und weist einen ersten Arm 28 für die Mitnahme des Schlagkörpers 7 und einen zweiten Arm 29 für die Mitnahme der Schlagstange 6 auf. Die beiden Arme 28, 29 erstrecken sich in Ausnehmungen 30, 31 in dem Schlagkörper 7 bzw. in der Schlagstange 6. Die Anordnung der Arbeitsfeder 20 in den Figuren 1, 3-5, 7, 10 und 11 hat den Vorteil, dass die beiden Mitnahmen der Schlagstange 6 bzw. des Schlagkörpers 7 spielfrei gehalten werden; auch bei Abnützung derselben wird der Massenausgleich nicht beeinträchtigt.

Im Hinblick darauf, dass mit dem Schaber Kräfte in ganz bestimmten Richtungen ausgeübt werden müssen, ist es erforderlich, dass weder die Schlagstange 6 noch der Schlagkörper 7 sich drehen können. Hierzu sind, siehe Fig. 2, auf der Welle 26 Rollen 32, 33 drehbar gelagert. An den Rollen 32 stützt sich der Schlagkörper 7 und an den Rollen 33 die Schlagstange 6 ab.

In Fig. 1 und 2 weisen die beiden Arme 28, 29 des Kupplungshebels 25 ungleiche Länge auf, jedoch können sie auch gleichlang sein oder ein anderes Längenverhältnis aufweisen.

In den Figuren 3 bis 8 bezeichnen Bezugszahlen, die bereits in den Figuren 1 und 2 verwendet werden, die dort bezeichneten Teile.

Bei der Ausführungsform nach Fig. 3 weist der Scaler dieselben Uebertragungsmittel 8, d.h. die Kulissenscheibe 15, die Kulisse 16 und die Tastrolle 17, wie bei der Ausführung nach Fig. 1 und 2 auf. Der Unterschied liegt darin, dass die Tastrolle 17 am Schlagkörper 7 drehbar gelagert ist. Der Schlagkörper 7 liegt hierbei im Innern eines hülsenförmigen Ansatzes 35 der Schlagstange 6. In dem zwischen der Stirnseite des Schlagkörpers 7 und dem Boden des Ansatzes 35 gebildeten Hohlraum 36 ist eine Rückholfeder 37 eingelegt.

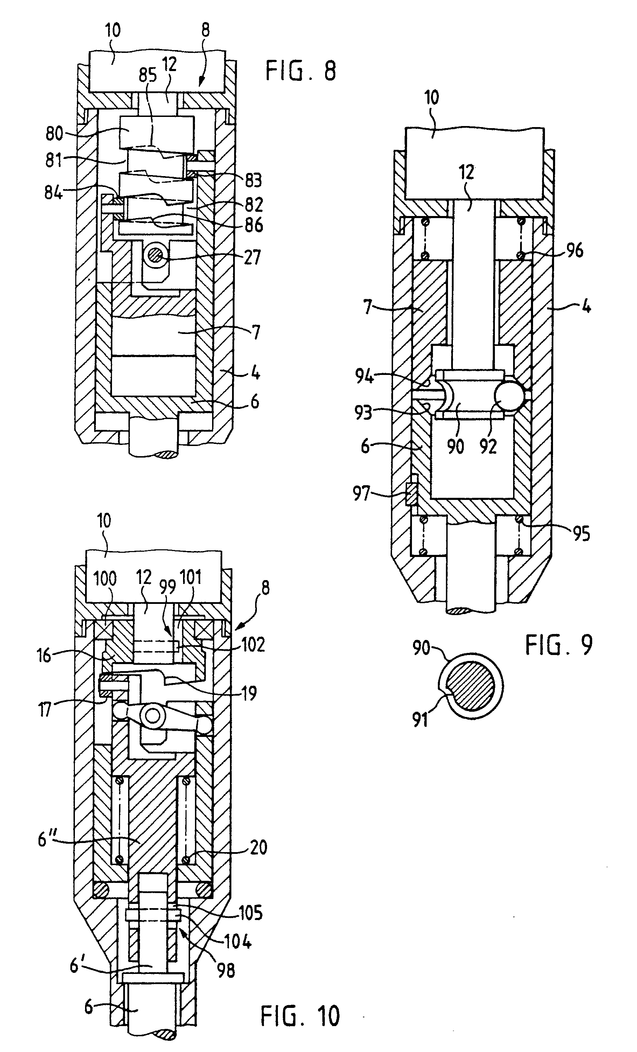

Bei der Ausführungsform nach Fig. 3 dreht die Kulissenscheibe 15, vom Schaber her gesehen, im Uhrzeigersinn. Auf dem stetig geneigten Rand der Kulisse 16 bewegt sich der Schlagkörper 7 in Richtung des Antriebsmittels 10 und die Schlagstange 6 über den Kupplungshebel 25 in der entgegengesetzten Richtung. Für die Ausführung der schlagartigen Rückbewegung der Schlagstange 6 bewegt sich die Tastrolle 17 schlagartig vom Grund des sprunghaften Ueberganges 19 auf den um die Sprunghöhe höherliegenden Kulissenrand, wodurch die Schlagstange 6 schlagartig zurückgezogen wird. Die Rückholfeder 37 hat hierbei lediglich die Aufgabe, die Tastrolle 17 an der Kulisse 16 zu halten. Das Antriebsmittel 10 ist wie in Fig. 10 ein Motor, gegebenenfalls mit einem Reduktionsgetriebe, dessen Antriebswelle 12 eine Drehbewegung ausführt. Selbstverständlich kann der Elektromotor in Fig. 1 und 3 durch einen Hydro- oder Pneumatikmotor ersetzt werden.

Bei der Ausführungsform des Scalers nach Fig.

4, ist ein Hubaggregat eingesetzt, dessen Antriebswelle 12 eine hin-und hergehende Bewegung ausführt. Auf der Antriebswelle 12 ist ein Schlagring 40 befestigt, dessen stirnseitiger Rand auf eine Randpartie 42 des Schlagkörpers 7 wirkt. Der Schlagkörper 7 liegt wie bei der Ausführung nach Fig. 3 im Innern des hülsenförmigen Ansatzes 35 der Schlagstange 6. Jedesmal, wenn der Rand 41 des Schlagringes 40 auf die Randpartie 42 des Schlagkörpers 7 trifft, erfolgt eine Bewegung des Schlagkörpers 7 vom Antriebsmittel 10 weg und gleichzeitig eine Rückbewegung der Schlagstange 6. Auf diese Weise kann ebenfalls die schlagartige Rückbewegung des Schabers verwirklicht werden.

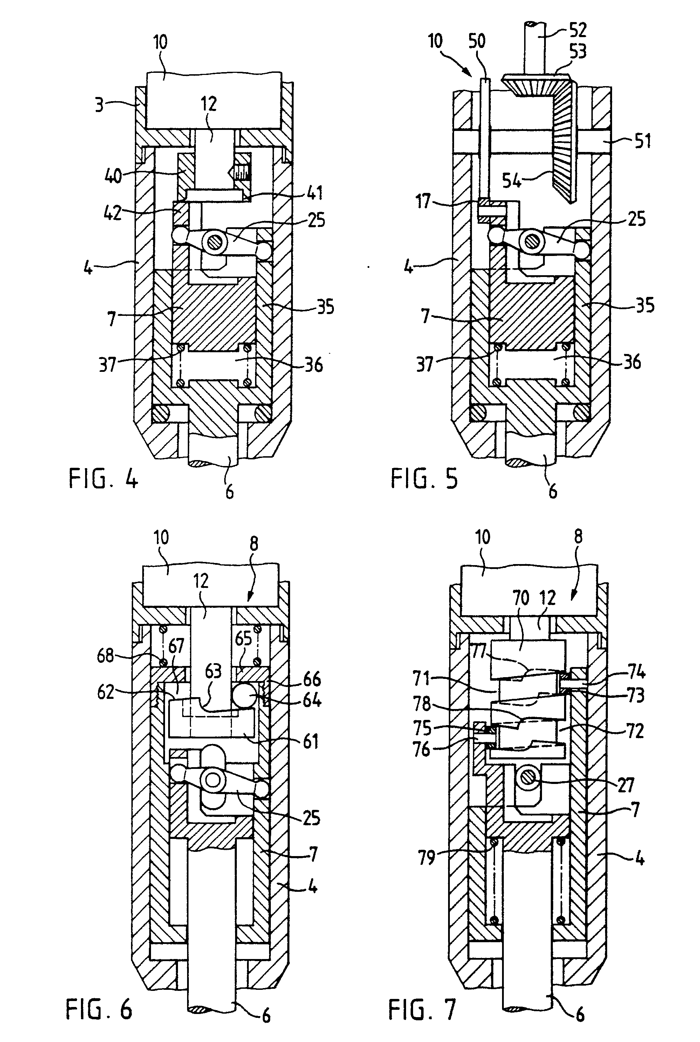

In Fig. 4 ist ebenfalls die Rückholfeder 37 in dem Hohlraum 36 eingelegt. Wird diese Feder entfernt, wird die Funktion des Scalers nicht beeinträchtigt. In diesem Fall übernimmt der Operateur die langsame Bewegung des Schabers 9 von der Laufläche des Zahnes weg in Richtung der Zahnwurzel. Hierbei wird die Schlagstange 6 und damit auch der hülsenförmige Ansatz 35 in Richtung des Antriebsmittels 10 bewegt, wodurch über den Kupplungshebel 25 die Randpartie 42 des Schlagkörpers 7 vom Rand 41 des Schlagringes 40 abgehoben wird. Wird nun der Handgriff 1 in Richtung der Zahnwurzel gegen die Kaufläche des Zahnes bewegt, bleibt der Schaber an der Berührungsfläche des Zahnes, bewegt sich die Schlagstange 6 vom Antriebsmittels 10 weg und der Schlagkörper 7 zum Antriebsmittel hin, bis die Randpartie 42 durch den Rand 41 des Schlagringes getroffen wird, wodurch die schlagartige Rückbewegung des Schabers 9 erfolgt. Auch in diesem Fall wird die eine grosse Anstrengung erfordernde Rückbewegung des Schabers selbsttätig vom Scaler nach Fig. 4 übernommen. Die Rückbewegung kann auch in Form einer Folge von kleinen Rückbewegungen erfolgen. Hierbei wird gegebenenfalls eine manuelle Rückbewegung dieser kleinen Rückbewegungen überlagert.

Bei der Ausführungsform des Scalers nach Fig. 5 handelt es sich um die gleiche Anordnung der Schlagstange 6, des Schlagkörpers 7 und des Kupplungshebels 25 wie in Fig. 3. Die Tastrolle 17 ist wie in Fig. 3 am Schlagkörper 7 drehbar gelagert. Anstelle einer Kulissenscheibe 15 ist in Fig. 5 eine Kurvenscheibe 50 eingesetzt, die auf einer Welle 51 befestigt ist. Die Kurvenscheibe 50 weist an ihrem gesamten Umfang einen stetig ändernden Radius mit einem ebenfalls vorhandenen sprunghaften Uebergang (nicht dargestellt) auf. Dieser Uebergang erteilt in gleicher Weise wie in Fig. 3 dem Schlagkörper 7 eine schlagartige Bewegung vom Antriebsmittel 10 weg, die eine entsprechende schlagartige Rückbewegung der Schlagstange 6 bewirkt.

Bei der Ausführung nach Fig., 5 ist als Antriebsmittel 10 ein eine drehende Bewegung ausführender Motor vorgesehen, dessen Antriebswelle 52 über ein Kegelradgetriebe mit einem Ritzel 53 und einem Kegelrad 54 die Welle 51 und damit das Kulissenrad 50 dreht.

Bei der Ausführungsform des Scalers nach Fig. 6 dreht das Antriebsmittel 10 über die Antriebswelle 12 eine Kulissenscheibe 61, deren Kulisse 62 mit dem Uebergang 63 gegen das Antriebsmittel 10 gerichtet ist. Auf der Kulisse 62 rollt eine Tastkugel 64 ab, die freibeweglich in den von der Kulisse 62 und dem Flansch 65 eines auf den Schlagkörper 7 aufgeschraubten Schraubdeckels 66 gebildeten freien Raum 67 liegt.

Die Drehbewegung der Kulissenscheibe 61 erfolgt im Gegenuhrzeigersinn, wobei beim Abfallen der Tastkugel 64 am sprunghaften Uebergang 63 eine Arbeitsfeder 68 den Schlagkörper 7 vom Antriebsmittel 10 weg bewegt, wodurch die Schlagstange 6 die schlagartige Rückbewegung mit dem Schaber 9 ausführt.

Bei den Ausführungsformen des Scalers nach Fig. 7 und 8 werden die Schlagstange 6 und der Schlagkörper 7 nicht mit einem Kupplungshebel wie in allen vorstehend beschriebenen Ausführungsformen gekuppelt. In Fig. 7 ist auf der Antriebswelle 12 des Antriebsmittels 10 ein Kulissenkörper 70 fest gelagert, der zwei sich über den Umfang erstreckende Kulissennuten 71, 72 aufweist, wobei die näher zum Antriebsmittel 10 gelegene Kulissennut 71 eine Tastrolle 73 aufnimmt, die mittels eines Zapfens 74 an dem Schlagkörper 7 drehbar gelagert ist. In der vom Antriebsmittel 10 weiter ab gelegenen Kulissennut 72 ist eine Tastrolle 75 geführt, die mit einem Zapfen 76 an der Schlagstange 6 drehbar gelagert ist. Die Form der Kulissennut 71, 72 ist derart ausgebildet, dass bei dem sprunghaften Uebergang 77 der Nut 71 der Schlagkörper 77 schlagartig vom Antriebsmittel weg und die Schlagstange 6 in einem entgegengesetzt gerichteten Uebergang 78 der Nut 72 gegen das Antriebsmittel 10 schlagartig bewegt wird. Eine Arbeitsfeder 79 unterstützt hierbei die schlagartigen Bewegungen des Schlagkörpers 7 und der Schlagstange 6.

Bei der Ausführungsform des Scalers nach Fig. 8 ist ebenfalls ein Kulissenkörper 80 auf der Antriebswelle 12 des Antriebsmittels 10 befestigt, die zwei Kulissennuten 81, 82 aufweist, wobei in die Nut 81 eine an der Schlagstange 6 drehbar gelagerte Tastrolle 83 abgestützt ist, während in der Nut 82 eine am Schlagkörper 7 drehbar gelagerte Tastrolle 84 abgestützt ist. Bei dieser Ausführungsform sind die sprunghaften Uebergänge 85 der Nut 81 und der Uebergang 86 in der Nut 82 so ausgebildet, dass an diesen Stellen die Schlagstange 6 eine schlagartige Bewegung gegen das Antriebsmittel 10 und der Schlagkörper 7 eine Bewegung vom Antriebsmittel weg ausführen. In beiden Ausführungen nach Fig. 7 und 8 erfolgt die Drehbewegung der Antriebswelle 12 vom Schaber 9 aus gesehen im Uhrzeigersinn. Ebenso sind in beiden Ausführungen Mittel zur Hinderung einer Drehbewegung der Schlagstange 6 und des Schlagkörpers 7 in Form einer Welle 27, siehe Fig. 2, die in dem vorderen Gehäuseteil 4 gelagert ist und drehbare Rollen trägt, an denen sich die Schlagstange 6 und der Schlagkörper 7 abstützen.

Bei der Ausführung nach Fig. 8 ist auf eine Arbeitsfeder wie in Fig. 7 verzichtet. Die schlagartigen Bewegungen werden in diesem Fall nur durch die sprunghaften Uebergänge 85, 86 gewährleistet.

Bei der Ausführung nach Fig. 9 ist das Ende der Schlagstange 6 und der Schlagkörper 7 hintereinander angeordnet und weisen an den zueinander gerichteten Stirnseiten Schrägflächen 93 bzw. 94 auf. Auf der Antriebswelle 12 ist eine Kurvenscheibe 90 befestigt, deren Durchmesser kontinuierlich zunimmt und einen sprunghaften Uebergang 91 aufweist, der zur Erzeugung der schlagartigen Rückbewegung der Schlagstange 6 dient. Mit der Kurvenscheibe 90 steht eine freibewegliche Kuppel 92 in Wirkungsverbindung, die sich an den Schrägflächen 93, 94 der Schlagstange 6 bzw. des Schlagkörpers 7 abstützt. Durch die Wirkung je einer auf die Schlagstange 6 bzw. den Schlagkörper 7 wirkende Arbeitsfeder 95 bzw. 96 wird die Kugel 92 spielfrei zwischen dem Umfang der Kurvenscheibe 90 und den Schrägflächen 93, 94 der Schlagstange 6 bzw. des Schlagkörpers 7 gehalten.

Rotiert die Antriebswelle 12, wird die Kugel 92 von der Kurvenscheibe 90 langsam nach auswärts gedrückt, wobei die Schlagstange 6 und der Schlagkörper 7 gegen die Kraft der Federn 95, 96 auseinander getrieben wird, wodurch die langsame Bewegung der Schlagstange 6 entsteht. Beim sprunghaften Uebergang der Kurvenscheibe 90 bewegt sich die Kugel wegen der Kraftwirkung der Federn 95, 96 auf die Schrägflächen 93, 94 schlagartig auf den kleineren Durchmesser der Kurvenscheibe, wodurch die schlagartige Rückbewegung der Schlagstange 6 mit dem Schaber entsteht. Durch einen, im vorderen Gehäuseteil 4 eingelegten Längskeil 97 wird eine Drehung der Schlagstange 6 verhindert. Bei dem teilweise dargestellten Scaler nach Fig. 10 ist dargestellt, dass zwischen der Antriebsscheibe 9 und der Kulissenscheibe 16 Kupplungsmittel 99 vorgesehen sind, die in Umfangsrichtung Spiel aufweisen. Zu diesem Zweck ist die Kulissenscheibe 16, z.B. mit einem Wälzlager 100, drehbar gelagert und weist eine Nut 101 auf, in die ein in der Antriebswelle 12 eingesetzter Bolzen 102 ragt. Der Durchmesser des Bolzens ist hierbei kleiner als die Breite der Nut 101. Damit wird erreicht, dass beim Uebergang der Tastrolle 17 beim sprunghaften Uebergang 19 sich die Kulissenscheibe 16 verschieben kann und somit die schlagartige Rückbewegung noch schneller erfolgt.

Eine weitere Verstärkung der Schlagwirkung der Schlagstange 6 kann durch Unterteilung der Schlagstange in zwei Teilstangen 6' und 6'', die durch eine Kupplung 98 mit Spiel zusammengehalten werden, erreicht werden. Die Kupplungsmittel 98 setzen sich aus einem in dem Schlagstangenteil 6' gelagerten Zapfen 104 und einer Nut 105 im Stangenteil 6'' zusammen. Wird nun beim Uebergang der Tastrolle 17 beim sprunghaften Uebergang 19 die Rückbewegung eingeleitet, bewegt sich zunächst nur der Stangenteil 6'', worauf dann der andere Stangenteil 6', der den Schaber trägt, mit einem Schlag zurückbewegt wird. Durch diese Spiel aufweisenden Kupplungsmittel 98, 99 kann die Schlagwirkung des Schabers verstärkt werden. Selbstverständlich ist es möglich, diese schlagverstärkenden Kupplungsmittel auch bei den anderen Ausführunsformen sinngemäss anzuwenden.

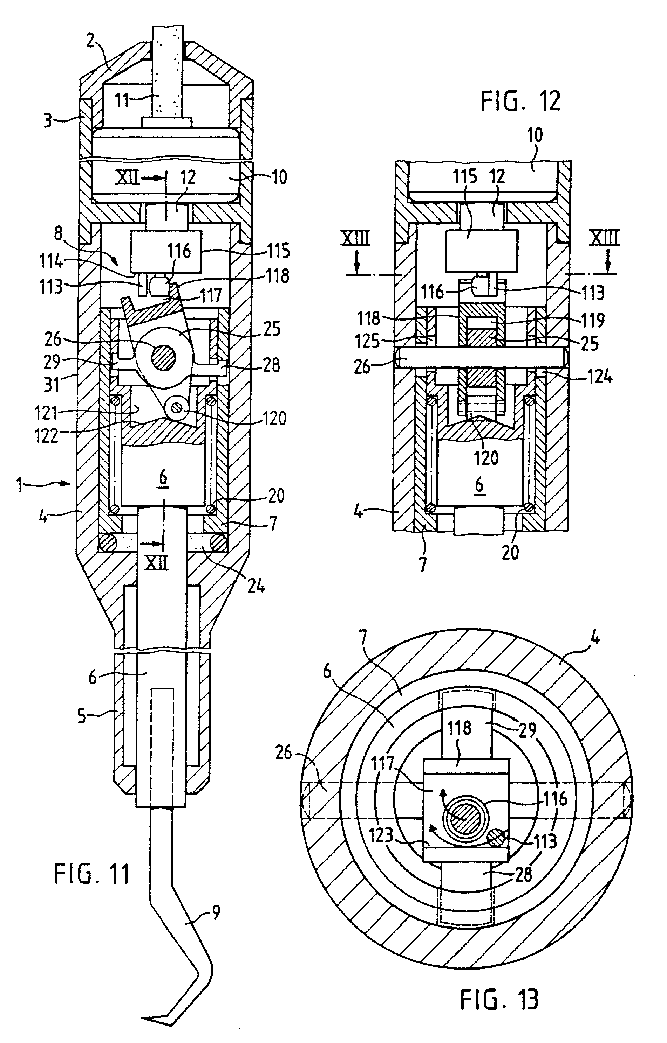

Bei der Ausführungsform des Scalers nach Fig. 11 bis 13 setzen sich die Uebertragungsmittel 8 aus einer vom Antriebsmittel 10 angetriebenen Scheibe 115, aus einer an der Stirnseite 114 dieser Scheibe befestigten Exzenterrolle 116 und aus einem neben der Exzenterrolle 116 auf einem grösseren Exzenterabstand als denjenigen der Exzenterrolle 116 angeordneten Exzenterstift 113 sowie aus einem Kipphebel 118 zusammen, welch letzterer in der im vorderen Gehäuseteil 4 abgestützten Welle 26 schwenkbar gelagert ist.

Die Exzenterrolle 116 und der Exzenterstift 113 ragen in eine Vertiefung des Kipphebels 118, welche als Nut 117 ausgebildet ist. Dadurch ist die Vertiefung nur auf zwei Seiten von Wänden begrenzt, an denen sich die Exzenterrolle 116 und der Exzenterstift 113 abstützen können. Diese Verhältnisse sind in Fig. 13 in vergrössertem Massstab dargestellt. In der gezeichneten Lage führt die Exzenterrolle 116 praktisch keine Hubwegung mehr aus, während der Exzenterstift 113 dem Kipphebel 118 eine zusätzliche Bewegung erteilt, da er bezüglich der Drehrichtung der Exzenterrolle 116 nachläuft, vorzugsweise etwa 20° - 45°. Dies hat zur Folge, dass die auf der gegenüberliegenden Seite der Welle 26 angeordnete Tastrolle 120 des Kipphebels 118 mit grosser Geschwindigkeit über die höchste Erhebung einer Kegelfläche 122 bewegt wird, welche im Grund einer Bohrung 121 in der Schlagstange 6 geformt ist. Durch diese vom Exzenterstift 113 bewirkte Zusatzbewegung wird erreicht, dass der Kipphebel 118, welcher sich auf der Kegelfläche 122 bewegt und hierbei die Schlagstange 6 gegen die Kraft einer Feder 20 abwärts drückt, von der Kegelfläche 122 momentan entfernt wird, so dass die Schlagstange 6 durch die Kraft der Feder 20 schlag- oder ruckartig in Richtung auf das Antriebsmittel 10 bewegt wird.

Aus Fig. 12 ist ersichtlich, dass der Kupplungshebel 25 in einer Ausnehmung 119 des Kipphebels 118 angeordnet ist, an deren unterm Ende die Tastrolle 120 gelagert ist. Die Welle 26 erstreckt sich durch Schlitze 124, 125 in dem Schlagkörper 7 bzw. in der Schlagstange 6. Dadurch werden der Schlagkörper 7 und die Schlagstange 6 an einer Drehung im Handgriff 1 gehindert. Die Verwendung des Kipphebels 118 zur Erzeugung der schlag- oder ruckartigen Rückzugbewegung des Scalers weist den Vorteil auf, dass die Antriebsleistung geringer ist als bei Verwendung einer Kulissenscheibe. Da mit dem Kipphebel 118 eine Uebersetzung erreicht wird, durch die der Leistungsaufwnad des Antriebsmittels 10 entsprechend vermindert wird.

Der in verschiedenen Ausführungsbeispielen beschriebene Scaler ist vom Operateur einfach zu handhaben. Die Drehzahl oder Schlagzahl kann durch entsprechende Regelung der Antriebsmittel 10 variiert werden. Es können hierbei je nach Bedarf schlagartige Rückbewegungen am Schaber 9 erreicht werden, wobei der Hub der Rückbewegung durch Verwendung von Kulissenscheiben 15 bzw. Kurvenscheiben 50, 90 mit unterschiedlicher Höhe des sprunghaften Ueberganges 19, 91 verändert werden kann. Gegenüber bekannten Scalern kann eine wesentlich höhere Leistung erreicht werden, die zudem ohne Ermüdung des Operateurs erreicht wird.

Es ist klar, dass der Scaler während der Bewegungen des Schabers 9 manuell über die Zahnfläche bewegt und verschoben werden kann, während nur die Schabebewegungen motorisch ausgeführt werden.

**Patentansprüche**

1. Scaler zum Reinigen eines Zahns, insbesondere seiner unter dem Zahnfleisch liegenden Partien von den auf seiner Oberfläche befindlichen Schichten an Zahnstein, Konkrementen und Wurzelzement mit einem Handgriff (1) mit darin eingebauten Antriebsmitteln (10), welche durch Uebertragungsmittel eine hin- und hergehende Bewegung einer Schlagstange (6) und eines mit derselben verbundenen Schabers (9) bewirken, **dadurch gekennzeichnet, dass** die Schlagstange (6) durch Verbindungsmittel (25, 71 - 76, 81 - 84, 90 - 94) mit einem Schlagkörper (7) formschlüssig, d. h. so, dass die Bewegung des einen Teils zwangsläufig eine Bewegung des anderen Teils bewirkt, derart gekuppelt ist, dass er eine zur Bewegung der Schlagstange (6) gegenläufige Bewegung ausführt.

2. Scaler nach Anspruch 1, dadurch gekennzeichnet dass als Verbindungsmittelein Kupplungshebel (25) dient, durch den die Schlagstange (6) und der Schlagkörper (7) miteinander mechanisch gekuppelt sind und der auf einer in einem Gehäuse (4) des Handgriffes (1) abgestützten Welle (26) schwenkbar gelagert ist sowie beidseits der Welle (26) angeordnete Arme (28, 29) aufweist, von denen der eine Arm (28) oder (29) für die Mitnahme der Schlagstange (6) und der andere Arm (29) oder (28) des Schlagkörpers (7) ausgebildet ist. (Fig. 1-6 und 10-13)

3. Scaler nach Anspruch 2, dadurch gekennzeichnet, dass auf der Welle (26) Stützrollen (32, 33) drehbar gelagert sind, die eine Verdrehsicherung für die Schlagstange (6) und den Schlagkörper (7) bilden.

4. Scaler nach Anspruch 1, dadurch gekennzeichnet, dass in einem von der Schlagstange (6) und bem Schlagkörper (7) gebildeten Hohlraum (36) eine den Kraftschluss gewährleistenden Rückholfeder (37) oder eine der direkten oder indirekten Kraftbeaufschlagung des Schabers (9) dienende Arbeitsfeder (20, 79) eingelegt ist.

5. Scaler nach Anspruch 1, dadurch gekennzeichnet, dass die Uebertragungsmittel (8) eine von dem Antriebsmittel rotierend angetriebene Kulissenscheibe (15) oder Kurvenscheibe (50) mit einem sprunghaften Uebergang (19) und einen auf der Schlagstange (6) oder an dem Schlagkörper (7) gelagerter Taster (17) umfassen. (Fig 1-5)

6. Scaler nach Anspruch 1, dadurch gekennzeichnet, dass die Uebertragungsmittel (8) eine auf der Antriebswelle (12) mit ihrer Kulisse (62) gegen das Antriebsmittel (10) gerichtete Kulissenscheibe (61) aufweisen, wobei eine Tastkugel (64) in einem zwischen der Kulisse und einem mit dem Schlagkörper (7) verbundenen Flansch (65) gebildeten Raum (67) freibewglich eingelegt und zwischen dem Flansch und dem Antriebsmittel eine der indirekten Kraftbeaufschlagung des Schabers (9) dienende Arbeitsfeder (68) angeordnet ist. (Fig. 6)

7. Scaler nach Anspruch 1, dadurch gekennzeichnet, dass die Uebertragungsmittel (8) ein eine rotierende Bewegung ausführender Kulissenträger (70, 80) ist, der zwei Kulissennuten (71, 72; 81, 82) mit sprunghaften Uebergängen (77, 78) aufweist, in die die Schlagstange (6) bzw. der Schlagkörper (7) mit Tastrollen (73, 75; 83, 84) eingreifen (Fig. 7,8)

8. Scaler nach Anspruch 1, dadurch gekennzeichnet, dass die Uebertragungsmittel eine Kurvenscheibe (90) mit einem sprunghaften Uebergang (91) und eine freibewegliche Kugel (92) umfassen, welch letztere an Schrägflächen (93, 94) der welche jeweils unter der Wirking einer Kraftfeder (95, 96) stehen. Schlagstange (6) und des Schlagkörpers (7) abgestützt ist, (Fig 9)

9. Scaler nach Anspruch 1, dadurch gekennzeichnet, dass die Antriebsmittel (8) und/oder die Schlagstange (6) Relativbewegungen bzw. Spiel in Umfangs- und Axialrichtung aufweisende Kupplungsmittel (98, 99) auweisen. (Fig. 10)

10. Scaler nach Anspruch 1, dadurch gekennzeichnet, dass die Uebertragungsmittel (8) eine auf der Antriebswelle (12) befestigte Exzenterrolle (116) aufweisen, welche in eine Vertiefung (117) eines in einem Gehäuseteil (4) des Handgriffes (1) gelagerten Kipphebels (118) ragt, der mit einem Taster (120) auf eine in der Schlagstange (6) angeordnete Kegelfläche (122) wirkt. (Fig 11-13)

11. Scaler nach Anspruch 10, dadurch gekennzeichnet, dass bei der Exzenterrolle (116) ein Exzenterstift (113) auf einem grösseren Exzenterabstand als demjenigen der Exzenterrolle angeordnet ist, wobei die Vertiefung (117) eine Nut ist, an deren Seitenwänden sich die Exzenterrolle und der Exzenterstift nur während eines Teils ihres Umlaufes abstützen.

12. Scaler nach Anspruch 10, dadurch gekennzeichnet,dass in dem auf der Welle (26) gelagerten Kipphebel (118) eine Ausnehmnung (119) vorgesehen ist, in welcher der Kupplungshebel (25) schwenkbar gelagert ist.

## Claims

1. A scaler for cleaning a tooth, in particular its sections lying below the gum, of layers located on its surface of tartar, concretions and root cement, with a handle (1), with drive means (10) incorporated therein, which effect through transmission means a to and fro movement of an impact rod (6) and of a scraper (9), connected to the same, characterised in that the impact rod (6) is coupled by means of connecting means (25, 71-76, 81-84, 90-94) to an impact body (7) in a form-locking manner, ie. such that the movement of the one part forcibly effects a movement of the other part, so that it executes an opposing movement to the movement of the impact rod (6).

2. A scaler according to claim 1, characterised in that as connecting means there serves a coupling lever (25), by means of which the impact rod (6) and the impact body (7) are coupled together mechanically and which is pivotably mounted on a shaft (26) supported in a housing (4) of the handle (1) as well as having arms (28, 29) arranged on both sides of the shaft (26), one arm of which (28) or (29) is formed for driving the impact rod (6) and the other arm (29) or (28) or for driving the impact body (7). (Figures 1-6 and 10-13).

3. A scaler according to claim 2, characterised in that on the shaft (26) there are rotatably mounted supporting rollers (32, 33), which form a protection against torsion for the impact rod (6) and the impact body (7).

4. A scaler according to claim 1, characterised in that in one cavity (36) formed by the impact rod (6) and the impact body (7) there is embedded a return spring (37) guaranteeing spring actuation, or a working spring (20, 79) serving the direct or indirect force action of the scraper (9).

5. A scaler according to claim 1, characterised in that the transmission means (8) comprises a coulisse disc (15) or cam plate (50) with an abrupt transition (19), driven in a rotating manner by drive means and a feeler (17) mounted on the impact rod (6) or on the impact body (7). (Figures 1-5).

6. A scaler according to claim 1, characterised in that the transmission means (6) has a coulisse disc (61) on the drive shaft (12) with its coulisse (62) directed against the drive means (10), wherein a feeler ball (64) is embedded in a free-moving manner in & chamber (67), formed between the coulisse and a flange (65), connected to the impact body (7), and arranged between the flange and the drive means there is a working spring (66) serving the indirect force action of the scraper (9). (Figure 6).

7. A scaler according to claim 1, characterised in that the transmission means (6) is a coulisse carrier (70,80) executing a rotating movement, which carrier has two coulisse grooves (71,72;81,82) with abrupt transitions (77,78), into which engage the impact rod (6) or the impact body (7) with feeler rollers (73, 75, 83,64). (Figures 7,8)

8. A scaler according to claim 1,
characterised in that the transmission means comprises a cam plate (90) with an abrupt transition (91) and a free-moving ball (92), the latter of which is supported on the inclined faces (93, 94) of the impact rod (6) and of the impact body (7), which in each case are under the action of a power spring (95, 96).

9. A scaler according to claim 1,
characterised in that the drive means (8) and/or the impact rod (6) have coupling means (98,99) with relative movement or play in the circumferential and axial direction. (Figure 10).

10. A scaler according to claim 1,
characterised in that the transmission means (8) has an eccentric roller (116) secured to the drive shaft (12), which projects into a recess (117) of a tilting lever (118) mounted in a housing part (4) of the handle (1), which acts with a feeler (120) on a conical face arranged in the impact rod (6). (Figures 11-13).

11. A scaler according to claim 10,
characterised in that in the eccentric roller (116) there is arranged an eccentric pin (113) at a larger eccentric distance than that of the eccentric roller, wherein the recess (117) is a groove, on the side walls of which the eccentric roller and the eccentric pin are only supported during part of its revolution.

12. A scaler according to claim 10,
characterised in that in the tilting lever (118) mounted on the shaft there is provided a recess (119), in which the coupling lever (25) is pivotably mounted.

**Revendications**

1. Dispositif détartreur pour nettoyer une dent, notamment les parties situées sous la gencive, des couches de tartre, de concrétions et de cément se trouvant sur sa surface, avec une poignée (1) contenant des moyens de commande (10) intégrés qui, par l'intermédiaire de moyens de transmission, provoquant un mouvement de va-et-vient d'une barre de frappe (6) et d'un racloir (9) relié à cette dernière; caractérisé en ce que la barre de frappe (6) est mécaniquement couplée avec un corps de frappe (7) par l'intermédiaire de moyens de liaison (25, 71 - 76, 81 - 84, 90 - 94) - c'est-à-dire que le mouvement de l'une de ces pièces provoque obligatoirement un mouvement de l'autre - de manière à ce qu'il exécute un mouvement contraire à celui de la barre de frappe (6).

2. Dispositif détartreur selon la revendication 1, caractérisé en ce que le moyen de liaison est un levier d'accouplement (25) par lequel la barre de frappe (6) et le corps de frappe (7) sont couplés mécaniquement, qui est logé de façon pivotante sur un arbre (26) monté dans un boîtier (4) de la poignée (1) et qui présente des bras (20 29) disposés des deux côtés de l'arbre (26), dont l'un - (28) ou (29) - est Prévu pour l'entraînement de la barre de frappé (6) et l'autre - (29) ou (28) - pour celui du corps de frappe (7). (Fig. 1 - 6 et 10 - 13).

3. Dispositif détartreur selon la revendication 2, caractérisé en ce que des rouleaux d'appui (32, 33) sont logés de façon pivotante sur l'arbre (26) en constituant une sécurité contre la torsion pour la barre de frappe (6) et le corps de frappe (7).

4. Dispositif détartreur selon la revendication 1, caractérisé en ce qu'un ressort de rappel (37) assurant la commande ou un ressort de travail (20, 79) servant à l'alimentation directe ou indirecte en énergie du racloir est inséré dans un creux (36) formé par la barre de frappe (6) et la corps de frappe (7).

5. Dispositif détartreur selon la revendication 1, caractérisé an ce que les moyens de commande (8) comprennent un disque à coulisse (15) ou un disque à came (50) somis à un entraînement par rotation du fait du moyen de commande, avec un passage brusque, ainsi qu'un bouton-poussoir (17) logé sur la barre de frappe (6) ou le corps de frappe (7). (Fig 1 - 5).

6. Dispositif détartreur selon la revendication 1, caractérisé en se que les moyens de transmission (8) présentent un disque à came (61) dont la came (62) est dirigée, sur l'arbre de commande (12), vers le moyen de transmission (10), une bille étant (64) insérée librement dans un espace (67) formé entre la came et une bride (65) reliée au corps de frappe (7), et un ressort de travail (68) permettant l'alimentation indirecte en énergie du racloir (9) étant disposé entre la bride et la moyen de commande. (Fig. 6).

7. Dispositif détartreur selon la revendication 1, caractérisé en ce que les moyens de transmission (8) se présentent sous la forme d'un support de coulisse (70, 00) effectuant un mouvement rotatif et présentant deux rainures de coulisse (71, 72; 81, 82) avec des passages brusques (77, 78), dans lesquels s'engrènent respectivement la barre ce frappe (6) et le corps de frappe (7) par l'intermédiaire de rouleaux oscillants (73,75 ; 83, 84). (Fig. 7, 8).

8. Dispositif détartreur selon la revendication 1, caractérisé en ce que les moyens de transmission (8) comprennent un disque à came (90) avec un passage brusque (91), ainsi qu'une bille à mouvement libre (92), appuyée sur des surfaces inclinées (93, 94) de la barre de frappe (6) et du corps de frappe (7) soumis chacun à l'effet d'un ressort de force (95, 96). (Fig. 9).

9. Dispositif détartreur selon la revendication 1, caractérisé en ce que les moyens de commande (8) et/ou la barre de frappe (6) sont équipés de moyens d'accouplement (98, 99) présentant des mouvements relatifs ou du jeu dans les sens périphérique et axial. (Fig. 10).

10. Dispositif détartreur selon la revendication 1, caractérisé en ce que les moyens de transmission (8) présentent une poulie excentrique (116) fixée sur l'arbre de commande (12) et entrant dans un logement (117) d'un levier oscillant (118) logé dans une partie du boîtier (4) de la poignée (1), lequel levier agit, par l'intermédiaire d'un bouton-poussoir (120), sur une surface conique (122) située dans la barre de frappe (6). (Fig. 11 - 13).

11. Dispositif détartreur selon la revendication 10, caractérisé en ce que'une, broche excentrique (113) est disposée, près de la poulie excentrique (116), à une distance d'excentration plus grande que celle de la poulie excentrique, le logement (117) se présentant sous forme de rainure, sur les parois de laquelle la poulie et la broche excentriques ne s'appuient que lors d'une partie de leur rotation.

12. Dispositif détartreur selon la revendication 10, caractérisé en se qu'un creux (119) est prévu dans le levier oscillant (118) logé sur l'arbre (26), creux dans lequel le levier d'accouplement (25) est logé de manière pivotante.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13